# FASCICULE DE BREVET EUROPEEN

(11) **EP 0 509 855 B1**
(45) Date de publication et mention de la délivrance du brevet: **13.09.1995**
(21) Numéro de dépôt: 92400624.0
(22) Date de dépôt: 11.03.1992
(51) Int. Cl.: C04B 35/64, H05B 6/80

(54) **Installation et procédé de traitement thermique par ondes hyperfréquences de compositions céramiques**
Vorrichtung und Verfahren zur thermischen Behandlung keramischer Verbundkörper mittels Ultrahochfrequenz
Apparatus and process for thermal treatment of ceramic composites by ultra high frequency

(30) Priorité: 14.03.1991 FR 9103065
(43) Date de publication de la demande: 21.10.1992
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Benoit, Joel Michel Daniel, F-77240 Cesson la Foret (FR); Bessenay, Gilles Jean Michel, F-75017 Paris (FR); Girault, Daniel Georges, F-77000 Melun (FR)

(56) Documents cités:
- EP-A- 0 329 338
- US-A- 4 938 673
- WORLD PATENTS INDEX LATEST Derwent Publications Ltd., London, GB; AN 85-319350 & JP-A-60221367

## Description

La présente invention concerne une installation de traitement thermique comportant un moyen de chauffage par ondes hyperfréquences ou micro-ondes et destinée à l'élaboration de pièces en matériau composite à matrice céramique. L'invention concerne également le procédé correspondant de mise en oeuvre.

On appelle ondes hyperfréquences, ou micro-ondes, des ondes hertziennes de fréquences inférieures à 300 G Hz, une fréquence standard couramment utilisée étant de 2,45 GHz.

Les avantages obtenus grâce à l'utilisation d'un chauffage par micro-ondes dans diverses applications sont connus :
- absence d'inertie thermique car le dégagement de chaleur est limité au temps de mise en service d'une source de rayonnement,
- chauffage direct à l'intérieur des produits sans atteindre l'environnement (enceinte, atmosphère gazeuse autour du produit et sans surchauffe des surfaces),
- amélioration de l'homogénéité de chauffage pour un produit homogène et possibilité d'un chauffage sélectif dans le cas d'un produit hétérogène.

De manière connue en soi, les installations de mise en oeuvre des traitements thermiques utilisant les micro-ondes comme moyen de chauffage comportent :
- Une source de rayonnement ou générateur d'ondes hyperfréquences qui transforme l'énergie électrique du réseau d'alimentation en énergie à micro-ondes, le générateur étant habituellement du type magnétron,
- une enceinte de traitement,
- un adaptateur situé entre le générateur et l'enceinte et qui a un rôle de transformateur d'impédances afin d'assurer un rendement satisfaisant,
- des guides d'onde reliant les différentes parties.
Des exemples de tels dispositifs sont notamment donnés par FR-A-2 390 025, FR-A-2 423 875, FR-A-2 523 797 et FR-A-2 606 577, qui décrivent diverses applications de procédés de mise en oeuvre.

Aucune solution pleinement satisfaisante n'a toutefois été proposée pour l'élaboration de pièces en matériau composite à matrice céramique faisant appel notamment à des cycles de traitements à de hautes températures, notamment supérieures à 1000°C. De tels besoins apparaissent notamment dans l'élaboration de pièces destinées aux moteurs aéronautiques.

Une installation de traitement thermique du type précité associée à un générateur de micro-ondes et satisfaisant à ces besoins est caractérisée en ce que ladite enceinte comporte un dispositif de pressage uniaxial à chaud des pièces placées dans des matrices solides et un piquage d'introduction d'un gaz neutre -de protection des pièces, tel que argon, dans l'enceinte.

Avantageusement, ladite enceinte constitue une cavité résonnante par rapport au champ de micro-ondes et présente une forme parallélépipédique de dimensions a x b x L dans un repère tri-rectangle O x y z.

D'autres caractéristiques et avantages de l'invention seront mieux compris à la lecture de la description qui va suivre d'un mode de réalisation de l'invention, en référence aux dessins annexés sur lesquels,

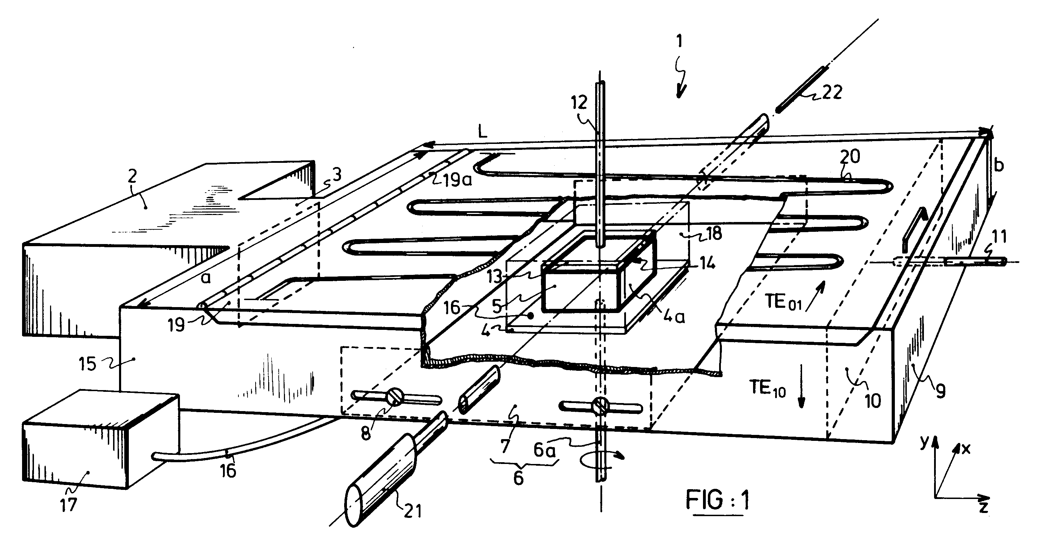

- la figure 1 représente un schéma d'ensemble d'une installation de traitement thermique conforme à l'invention.

Une installation de traitement thermique conforme à l'invention, destinée à l'élaboration de pièces en matériau composite à matrice céramique et notamment à matrice verre, représentée sur la figure 1, se compose notamment d'une enceinte 1 proprement dite, de forme générale parallèlépipédique, d'un générateur 2 d'ondes hyperfréquences ou micro-ondes et d'un guide d'ondes 3 reliant le générateur 2 à l'enceinte 1. On appellera a, b et L les dimensions internes de l'enceinte 1 de traitement dans un repère trirectangle Ox y z. Dans une utilisation de ladite installation conforme à l'invention, on recherchera notamment un mode de répartition de l'énergie des micro-ondes du type TE₀₁ selon lequel le champ électrique E est constant et parallèle à la direction Ox. Mais l'invention n'exclut pas un mode de fonctionnement selon lequel le mode stabilisé est du type TE₁₀ pour lequel le champ électrique est parallèle à la direction Oy. Ladite enceinte de traitement 1 comporte des aménagements remarquables conformes à l'invention et notamment, elle comporte un support 4 d'une pièce à réaliser 5. Le support 4 est réalisé en un matériau isolant thermiquement, à faible densité et à faibles pertes diélectriques. Une solution satisfaisante est obtenue par l'utilisation d'un matériau fibreux dans une matrice à base de zircone ou de silice. Ledit support 4 est solidaire d'un dispositif 6 susceptible de déplacer le support 4 soit en rotation au moyen d'un axe 6a soit en translation à l'intérieur de l'enceinte, notamment suivant une direction Oz perpendiculaire au champ électrique des micro-ondes. Le dispositif 6 comporte ainsi un berceau mobile 7 dont le blocage est assuré par des vis 8. En outre, à une des extrémités de l'enceinte, opposée à l'extrémité d'entrée des ondes, la paroi 9 parallèle au champ électrique est doublée d'une paroi mobile 10 formant piston d'accord, déplaçable au moyen d'une tige 11. Cette disposition permet de placer l'enceinte 1 dans des conditions stabilisées de résonnance par rapport au champ d'ondes. Après l'accord initial obtenu grâce au piston 10, le support 4 portant la pièce 5 peut être déplacé en translation dans l'enceinte 1 au moyen du berceau mobile 7 pour tenir compte du déplacement des ondes stationnaires à mesure que le couplage du matériau de la pièce 5 progresse dans le volume afin de maintenir la pièce 5 dans les conditions optimales de couplage et notamment dans les zones de l'enceinte 1 où le champ électrique est maximal. Ledit berceau 7 comporte notamment des plaques conductrices de l'électricité pouvant glisser dans l'enceinte 1 tout en maintenant la continuité électrique et de manière à éviter des fuites du rayonnement de micro ondes. Sur ledit support 4, la pièce 5 est disposée dans des matrices solides 4a, également constituées en un matériau non-couplant par rapport aux champs de micro-ondes, notamment un matériau fibreux tel que zircone ou silice.
Sur la face supérieure de l'enceinte 1 se trouve en outre monté un dispositif de pressage 12 dont la matrice 13 est susceptible de presser la pièce 5 portée par le support 4 à l'intérieur de l'enceinte 1. Le matériau constituant ladite matrice 13 de pressage doit être compatible avec le matériau des pièces 5 à traiter c'est-à-dire éviter toute réaction mutuelle dans les conditions du traitement et en outre tout couplage avec le champ de micro-ondes doit être évité. On utilise notamment une matrice de pressage 13 en matériau fibreux dans une matrice en matériau à faibles pertes diélectriques tel que zircone ou silice. Une surface de contact 14 avec la pièce 5 est réalisée en matériau densifié sur la matrice de pressage 13. Une paroi 15 de l'enceinte 1 comporte un piquage 16 susceptible d'être raccordé à une source extérieure, schématisée en 17, d'alimentation en gaz neutre, par exemple de l'argon afin d'obtenir lors de traitements de pièces 5 comportant des fibres céramiques sensibles à l'oxydation une atmosphère neutre protectrice au voisinage de la pièce 5. On adjoint en outre au support 4 de pièce 5 des écrans thermiques 18 entourant ladite pièce, la matrice de pressage 13 se trouvant elle-même à l'intérieur de la zone délimitée par lesdits écrans 18 qui comportent un passage 18a du dispositif 12. Lors du traitement de la pièce 5 par la mise en oeuvre du chauffage par micro-ondes en effet, en l'absence de tels écrans 18, un rayonnement thermique d'échanges entre la surface extérieure de la pièce 5 et les parois froides de l'enceinte 1 entraînerait un gradient de température entre le coeur de la pièce 5 et sa surface extérieure qui serait nuisible à la qualité des résultats. Le matériau utilisé pour ces écrans 18 doit donc présenter des propriétés réflectrices du rayonnement thermique et ne pas donner lieu à un couplage avec le champ de micro-ondes. Un exemple de matériau satisfaisant à ces conditions est constitué par un matériau fibreux à faible densité dans une matrice en matériaux à faibles pertes diélectriques tel que zircone ou silice.

Selon le type de pièce 5 à réaliser, le support 4 peut être de forme rectangulaire ou circulaire. Dans tous les cas, la matrice de pressage 13 et les écrans 18 ont la forme adaptée correspondante.

La face supérieure de l'enceinte 1 peut notamment être constituée par une paroi mobile constituée par un couvercle pivotant autour d'une charnière 19a, de manière à ménager l'accès à ladite enceinte 1, tout en maintenant en fonctionnement une continuité électrique parfaite.

L'utilisation de l'installation de traitement thermique conforme à l'invention pour l'élaboration de pièces 5 en matériau composite céramique à matrice céramique nécessite d'atteindre de hautes températures, notamment supérieures à 1000°C. Ces conditions d'emploi créent des risques d'échauffement local provoquant des dilatations nuisant à la tenue en service de l'enceinte 1. Afin d'éliminer ce risque, un système de refroidissement est adjoint audit couvercle 19. Ce système comporte notamment un tube 20 soudé sur le couvercle 19 et dans lequel on crée une circulation d'eau de refroidissement. Dans le cas d'un couvercle 19 métallique en acier inoxydable, un tube en alliage de cuivre peut par exemple être utilisé.

La surveillance et le suivi des traitements effectués dans l'enceinte 1 implique également un contrôle des températures atteintes par le matériau des pièces 5 à traiter. On peut utiliser dans ce but, d'une part, un moyen connu en soi, du type pyromètre optique à deux couleurs, schématisé en 21, pour obtenir une mesure de température de surface de la pièce 5 et d'autre part, un thermocouple à fibres optiques, notamment à base de silice, schématisé en 22 et permettant d'obtenir la mesure de température à coeur de la pièce 5.
L'installation de traitement thermique conforme à l'invention qui vient d'être décrite, en référence à la figure 1 peut notamment être utiliée pour réaliser un chauffage homogène par micro-ondes d'un produit en matériau composite céramique à matrice céramique, en nappe ou en grande feuille disposée dans l'enceinte 1 constituant une cavité résonnante de grande dimension, de manière à obtenir un pressage uniaxial de pièces en matériau céramique à matrice céramique, notamment du type matrice verre ou vitro-céramique et renforcé de fibres longues ou courtes, avec chauffage simultané dans un champ de micro-ondes.
Lesdites dimensions a et b de l'enceinte 1 peuvent notamment être dans un rapport tel que a/b est supérieur à quatre. La valeur de la dimension b de l'enceinte 1 peut être agencée de manière à répartir les ventres de l'onde en résonnance dans le sens longitudinal de ladite enceinte 1, parallèlement à la direction Oz, de façon déterminée. Ladite dimension b peut notamment être choisie proche de la valeur c/2 f, c étant la vitesse de la lumière dans le vide et f, la fréquence de l'onde hyperfréquence utilisée. Une fréquence standard de 2,45 GHz peut par exemple être utilisée.
Un procédé de traitement thermique de pièces 5 en matériau composite à matrice céramique utilisant ladite installation de traitement thermique conforme à l'invention comporte notamment les étapes suivantes :
a) mise en place de la pièce sur un support à l'intérieur de l'enceinte de traitement, puis mise en place des écrans de protection thermique et fermeture de l'enceinte ;
b) introduction du gaz de protection ;
c) Chauffage de la pièce par micro-ondes jusqu'à une température supérieure à 1000°C et déterminée en fonction du matériau constituant la pièce ;
d) Pressage simultané de la pièce au moyen du dispositif de pressage uniaxial intégré à ladite enceinte ;
e) Arrêt du chauffage ;
f) Dégagement et sortie de la pièce.

## Revendications

1. Installation de traitement thermique de pièces en matériau composite à matrice céramique comportant une enceinte de traitement (1) associée à un générateur (2) d'ondes hyperfréquences ou micro-ondes et à un guide d'ondes (3) caractérisée en ce que ladite enceinte (1) comporte un dispositif (12) de pressage uniaxial à chaud des pièces placées dans des matrices solides (4a) et un piquage (16) d'introduction d'un gaz neutre de protection des pièces, tel que argon, dans l'enceinte.

2. Installation de traitement thermique selon la revendication 1 dans laquelle ladite enceinte (1) de traitement comporte une paroi (10) formant piston d'accord de manière à constituer une cavité résonnante par rapport au champ de micro-ondes.

3. Installation de traitement thermique selon l'une des revendications 1 ou 2 dans laquelle ladite enceinte (1) de traitement comporte un support (4) de pièces (5) associé auxdites matrices (4a), constitué en matériau thermiquement isolant et associé à un dispositif d'entraînement (6a) en rotation et à un dispositif (7) mobile en translation suivant une direction perpendiculaire à la direction du champ électrique généré par les micro-ondes.

4. Installation de traitement thermique selon la revendication 3 dans laquelle lesdites matrices et ledit support (4) de pièces sont constitués en un matériau fibreux de faible densité, à faibles pertes diélectriques du type zircone ou silice.

5. Installation de traitement thermique selon l'une quelconque des revendications 1 à 4 dans laquelle les pièces (5) à traiter sont entourées d'écrans thermiques (18).

6. Installation de traitement thermique selon la revendication 5 dans laquelle lesdits écrans thermiques (18) sont constitués en un matériau fibreux à faible densité et à faibles pertes diélectriques du type zircone ou silice.

7. Installation de traitement thermique selon l'une quelconque des revendications 1 à 6 dans laquelle la partie du dispositif (12) de pressage disposée à l'intérieur de l'enceinte de traitement et constituant une matrice de pressage (13) est constituée en un matériau fibreux à faibles pertes diélectriques du type zircone ou silice, présentant une zone densifiée (14) correspondant à la surface de contact avec les pièces à traiter.

8. Installation de traitement thermique selon l'une quelconque des revendications 1 à 7 dans laquelle un dispositif de refroidissement (20) est placé au moins sur la paroi supérieure (19) de ladite enceinte de traitement.

9. Installation de traitement thermique selon l'une quelconque des revendications 1 à 8 dans laquelle en cours de traitement la puissance électrique des micro-ondes appliquée aux pièces est modulée en fonction de deux indications de température relevées d'une part en surface de pièce au moyen d'au moins un pyromètre à fibre optique (21) et d'autre part au coeur du matériau des pièces au moyen d'au moins un thermocouple (22) à fibre optique à base de silice.

10. Procédé de traitement thermique de pièces en matériau composite à matrice céramique utilisant l'instalation de traitement conforme à l'une quelconque des revendications 1 à 9 comportant les étapes suivantes :
a) Mise en place de la pièce dans des matrices solides disposées sur un support à l'intérieur de l'enceinte de traitement puis mise en place des écrans de protection thermique et fermeture de l'enceinte ;
b) Introduction du gaz de protection ;
c) chauffage de la pièce par micro-ondes jusqu'à une température supérieure à 1000°C et déterminée en fonction du matériau constituant la pièce ;
d) Pressage simultané de la pièce au moyen du dispositif de pressage uniaxial intégré à l'enceinte ;
e) Arrêt au chauffage ;
f) dégagement et sortie de la pièce.

## Claims

1. An installation for heat treating articles of composite material having a ceramic matrix comprising a treatment chamber (1) associated with a microwave generator (2) and a wave guide (3), characterised in that the treatment chamber(1) comprises means (12) for uniaxially hot pressing the articles in strong dies (4a) and a line (16) for injecting a neutral article-shielding gas such as argon into the chamber.

2. An installation according to claim 1 wherein the treatment chamber (1) comprises a wall (10) serving as tuning piston so as to form a resonant cavity relatively to the microwave field.

3. An installation according to claim 1 or 2 wherein the chamber (1) comprises a support (4) for articles (5), the support being associated with the dies (4a), being made of a heat insulant and being associated with rotating means (6a) and means (7) displaceable in a direction perpendicular to the direction of the electric field produced by the microwaves.

4. An installation according to claim 3 wherein the dies (4a) and the support (4) are made of a fibrous low-density low-dielectric-loss material such as zirconia or silica.

5. An installation according to any of claims 1 to 4 wherein the articles (5) to be treated are surrounded by heat shields (18).

6. An installation according to claim 5 wherein the heat shields (18) are made of a fibrous low-density low-dielectric-loss material such as zirconia or silica.

7. An installation according to any of claims 1 to 6 wherein that part of the pressing means (12) which is disposed in the treatment chamber (1) and serves as a pressing die (13) is made of a fibrous low-dielectric-loss material, such as zirconia or silica, having a densified zone (14) corresponding to the surface which contacts the articles to be treated.

8. An installation according to any of claims 1 to 7 wherein cooling means (20) are provided at least on the top wall (19) of the chamber (1).

9. An installation according to any of claims 1 to 8 wherein during treatment the electric power of the microwaves applied to the articles is modulated in dependence upon two temperature indications, one of which is derived from a surface part of the article by means of at least one optical fibre pyrometer (21) and the other of which is derived from the core of the material of the articles by means of at least one silica-based optical fibre thermocouple (22).

10. A process for heat treating articles of composite material having a ceramic matrix using the treatment installation according to any of claims 1 to 9 and comprising the following steps:
a) Placing the article in strong dies disposed on a support in the treatment chamber, then positioning the heat shields and closing the chamber;
b) Injecting the shielding gas;
c) Microwave heating of the article to a temperature above 1000°C determined in dependence upon the material of the article;
d) Simultaneous pressing of the article by means of the uniaxial pressing means incorporated in the chamber;
e) Stopping the heating, and
f) Release and removal of the article.

## Patentansprüche

1. Vorrichtung zur thermischen Behandlung von Stücken aus Verbundstoff mit Keramikmatrize, bestehend aus einem Behandlungsbehälter (1), der mit einem Ultrahochfrequenz- oder Mikrowellengenerator (2) und einem Wellenleiter (3) verbunden ist,
dadurch gekennzeichnet,
daß der genannte Behandlungsbehälter (1) eine Vorrichtung (12) zum einachsigen Warmpressen von Stücken, die in festen Matrizen (4a) angeordnet sind, und einen Stutzen (16) zum Einführen eines neutralen Gases, wie z.B. Argon, zum Schutz der Stücke in den Behälter aufweist.

2. Vorrichtung zur thermischen Behandlung nach Anspruch 1, wobei der genannte Behandlungsbehälter (1) eine Wandung(10) aufweist, die einen Abstimmungskolben bildet, so daß ein Resonanzhohlraum gegenüber dem Mikrowellenfeld entsteht.

3. Vorrichtung zur thermischen Behandlung nach einem der Ansprüche 1 oder 2, wobei der genannte Behandlungsbehälter (1) eine Halterung (4) für Stücke (5) aufweist, die mit den genannten Matrizen (4a) verbunden ist, aus thermisch isolierendem Material besteht und mit einer Drehantriebsvorrichtung (6a) und einer Vorrichtung (7), die senkrecht zu dem von den Mikrowellen erzeugten elektrischen Feld verschiebbar ist, verbunden ist.

4. Vorrichtung zur thermischen Behandlung nach Anspruch 3, wobei die genannten Matrizen und die genannte Halterung (4) für Stücke aus einem faserigen Material mit geringer Dichte und geringen dielektrischen Verlusten wie Zirkon oder Silizium bestehen.

5. Vorrichtung zur thermischen Behandlung nach einem der Ansprüche 1 bis 4, wobei die zu behandelnden Stücke (5) von thermischen Schirmen (18) umgeben sind.

6. Vorrichtung zur thermischen Behandlung nach Anspruch 5, wobei die genannten thermischen Schirme (18) aus einem faserigen Material mit geringer Dichte und geringen dielektrischen Verlusten wie Zirkon oder Silizium bestehen.

7. Vorrichtung zur thermischen Behandlung nach einem der Ansprüche 1 bis 6, wobei der Teil der Preßvorrichtung (12), der im Inneren des Behälters angeordnet ist und eine Preßmatrize (13) bildet, aus einem faserigen Material mit geringer Dichte und geringen dielektrischen Verlusten wie Zirkon oder Silizium besteht, das einen verdichteten Bereich (14) aufweist, der der Kontaktfläche mit den zu behandelnden Stücken entspricht.

8. Vorrichtung zur thermischen Behandlung nach einem der Ansprüche 1 bis 7, wobei eine Kühlvorrichtung (20) mindestens auf der oberen Wandung (19) des genannten Behandlungsbehälters angeordnet ist.

9. Vorrichtung zur thermischen Behandlung nach einem der Ansprüche 1 bis 8, wobei im Verlaufe der Behandlung die an die Stücke angelegte elektrische Leistung der Mikrowellen in Abhängigkeit von zwei Temperaturangaben moduliert wird, die zum einen an der Oberfläche des Stückes durch mindestens einen Lichtleitfaser-Pyrometer (21) und zum anderen im Kern des Materials der Stücke durch mindestens ein Thermoelement (22) mit Lichtleitfaser auf Siliziumbasis abgenommen werden.

10. Verfahren zur thermischen Behandlung von Stücken aus Verbundmaterial mit Keramikmatrize unter Verwendung der Vorrichtung zur thermischen Behandlung gemäß einem der Ansprüche 1 bis 9, bestehend aus den folgenden Schritten:
a) Anbringung des Stückes in festen Matrizen, die an einer Halterung im Inneren des Behandlungsbehälters angeordnet sind, sodann Anbringung der thermischen Schutzschirme und Verschließen des Behälters;
b) Einführen des Schutzgases;
c) Erwärmen des Stückes durch Mikrowellen bis auf eine Temperatur von mehr als 1000 °C, die in Abhängigkeit von dem Material bestimmt ist, aus dem das Stück besteht;
d) Gleichzeitiges Pressen des Stückes mit der in dem genannten Behälter eingebauten einachsigen Preßvorrichtung;
e) Beenden des Erwärmungsvorgangs;
f) Lösen und Herausnehmen des Stückes.
